# EUROPEAN PATENT APPLICATION

(11) **EP 1 263 193 A2**
(43) Date of publication of application: **04.12.2002**
(21) Application number: 02396081.8
(22) Date of filing: 30.05.2002
(51) Int. Cl.: H04M 1/02

(54) **Mobile station including a display element**

(30) Priority: 31.05.2001 FI 20015005
(71) Applicant: Nokia Corporation, 02150 Espoo (FI)
(72) Inventor: Tenhunen, Antti, 40270 Palokka (FI); Suominen, Pasi, 33700 Tampere (FI)
(74) Representative: Helke, Kimmo Kalervo

(57) **Abstract**

The invention relates to a mobile station (10) including a display element (11), which also includes a keypad (12), a loudspeaker (13), and a microphone (14). In addition, the orientation of the window (15) of the display element (11) is arranged to be alterable in relation to the mobile station (10). The mobile station (10) also includes a detector element (16) that senses its position, in order to automatically change the orientation of the window (15).

## Description

The present invention relates to a mobile station including a display element, and which also includes a keypad, a loudspeaker, and a microphone, as well as connection and control means for them and an operating system, the orientation of the window of the display element being arranged to be alterable in relation to the mobile station.

The continual development of technology has significantly reduced the size of mobile stations. Correspondingly, the properties of the display elements have improved, making it possible to use various graphical icons and even moving images in mobile stations. An attempt is then made to make the display sufficiently large, to improve the convenience of use and also readability in general. Conventional mobile stations are generally elongated, so that the window of the display element can be made higher than it is wide.

When a large display is created, the keypad becomes correspondingly small. In new models, the keypad accounts for less than half of the frontal surface area of the mobile station. This makes it difficult to operate a keypad that is below the display element, especially using only one hand. Particularly when using small mobile stations, there is little support surface for fingers while the mobile station's centre of gravity is located far from the support surface. The upper end of the mobile station then tends to press down, stressing the user and easily leading to the mobile station falling.

Attempts have been made to improve the readability of the actual display element by altering the orientation of the window in relation to the mobile station. One GPS navigator has this kind of arrangement in which the orientation of the window is rotated through 90 degrees. This creates a window that is wider than it is high, thus giving, for example, more fluent word wrap and better readability. The orientation is changed through the navigator's operating system, according to the user's selection. The said 90-degree turn has, however, only a small effect on the usability of the mobile station. In addition, the change requires operations by the user.

A known mobile station with a flap, and in which the display element is also touch sensitive, has a corresponding capability. When using the mobile station as a telephone, the flap is usually closed. Only part of the window of the display element is then visible. Most of the display element is covered beneath the flap, in which case the keys in the flap press on the touch-sensitive display element. When the flap is opened, the window of the display element rotates through 90 degrees and the entire window becomes available with the mobile station being horizontal. In this case too, the rotation of the window has little effect on the usability of the mobile station. In practice, it takes two hands to operate the mobile station in question, as the keypad is operated with a special pen. In addition, it is technically difficult to fit the large display element and its covering flap into conventional, and particularly small mobile stations.

The invention is intended to create a mobile station including a keypad, which is easier and more stable to use than previously, especially with one hand, and which can be adapted faster and more simply to different operating situations. The characteristic features of the invention are stated in the accompanying Claims. The mobile station according to the invention is arranged to be used in different positions. The mobile station can then be gripped as firmly as possible, with no danger of its falling. In the different operating positions, at least the window of the mobile station's display element can be read normally. Preferably other functions too, such a the operations of the keypad, also turn. From the point of view of the user, it is significant that the changes take place entirely automatically.

In the following, the invention is examined in detail reference to the accompanying drawings depicting some embodiments of the invention, in which
- Figure 1a: shows the mobile station according to the invention in the normal operating position,
- Figure 1b: shows the mobile station of Figure 1a in an alternative operating position,
- Figure 1c: shows an enlargement of one key of the mobile station according to the invention,
- Figure 2: shows a block diagram of the operation of the mobile station according to the invention,
- Figure 3a: shows a second embodiment of the mobile station according to the invention, in the normal operating position,
- Figure 3b: shows the mobile station of Figure 3a in an alternative operating position.

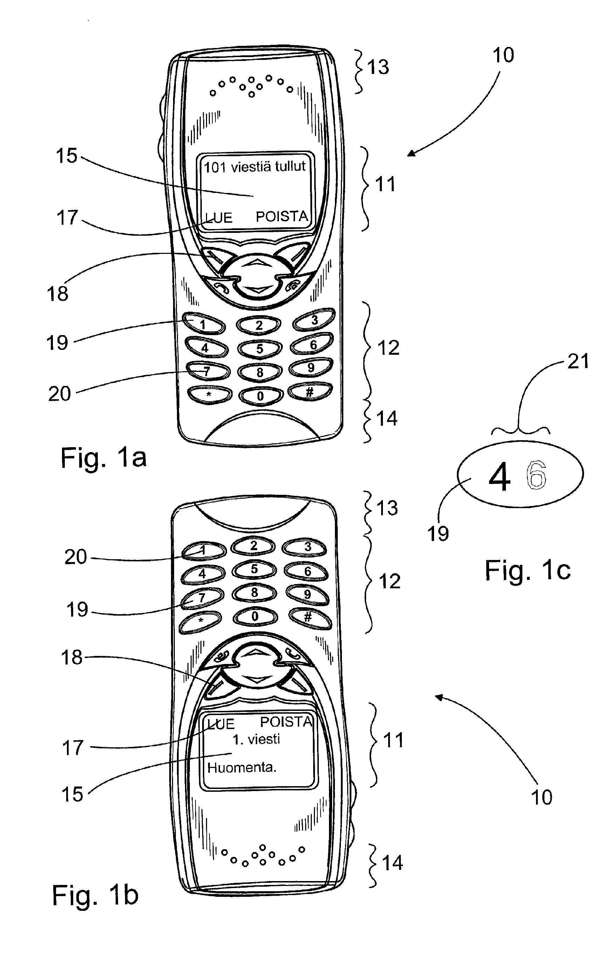

Figure 1a shows a mobile station 10, according to the invention, including a display element 11, in the normal operating position. In addition, the mobile station 10 includes a keypad 12, a loudspeaker 13, and a microphone 14. The connection and control devices of the components are part of the internal construction of the mobile station and are not shown. Further, the mobile station has an operating system with related editable software, which permits the versatile use of the mobile station.

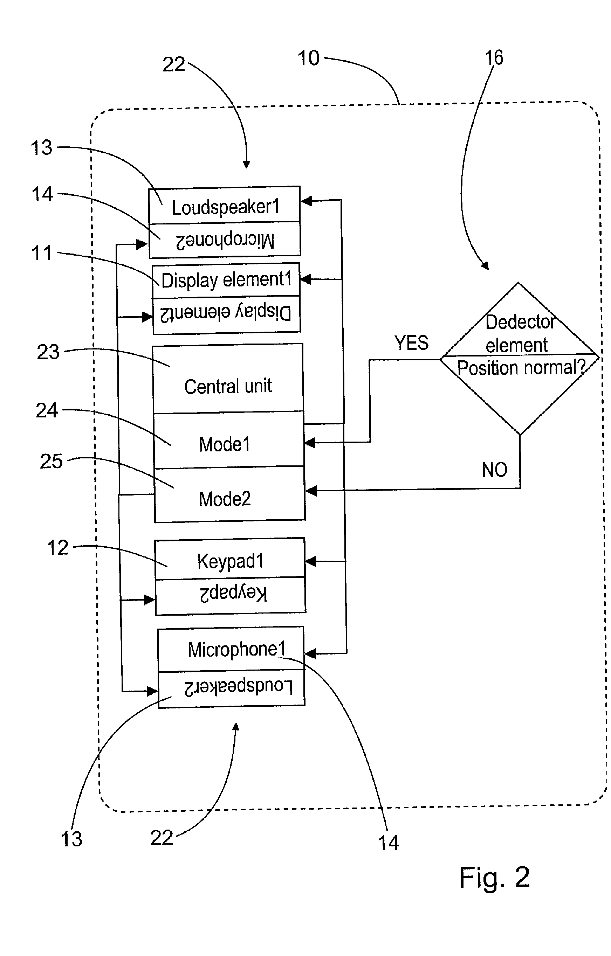

Figure 1b shows the mobile station 10 in the alternative operating position. Even when turned upside down, the window 15 of the display element 11 of the mobile station 10 can surprisingly be read normally. For this purpose the mobile station 10 includes a detector element 16 that senses its position, in order to automatically (Figure 2) change the orientation of the window 15. The term window refers to the text, icons, or images displayed by the display element. Turning the window facilitates the use of the mobile station, for example, if it is in a holder on the user's belt or round the user's neck (not shown). In that case, when a call or short message arrives, the window can be read normally by turning the mobile station to the vertical position and thus upside down, which will accelerate a decision to reply, for instance. At the same time, the keypad cues 17 operate normally with the aid of the function keys 18. The same reference numbers are used for components that are functionally identical.

In practice, the detector element is a state sensor, which is arranged to sense the normal operating position of the mobile station and the corresponding essentially upside-down operating position. The state sensor can be a separate component, or it can be part of the construction of the mobile station. For example, it is possible to use an angle sensor that is, as such, known. The detector element 16 is shown schematically in Figure 2. The actual construction of the state sensor can vary in different applications, but generally it does not require great sensitivity, as the operating positions are largely opposite to each other. In addition, the rotation of the window and its delay are preferably regulated by the software. For example, the signal of the state sensor should remain unchanged for a specific time, before the orientation of the window is changed.

The above description is of the rotation of the window, when the mobile station can be used normally with the aid of the keypad cues featured in the window and the function keys. According to the invention, the operation of the keypad is also arranged to change automatically according to the display element. The keypad 12 can then also be used when the mobile station 10 is in the alternative operating position, i.e., in this case, when it is upside down, according to Figure 1b. This has the important advantage, for example, when writing short messages, that the mobile station rests firmly on the user's palm and the keypad is above the display element. The mobile station can then be operated securely with even one hand while the window of the display element is easer to shield from other people.

In known mobile stations, each key of the keypad has an identifying marking, which depicts the programmed function of the key in question, such as a number or a letter. For reasons of clarity, only one identifying marking 20 is shown on each key 19 in Figures 1a and 1b. In practice, the operation of the keypad can be easily changed using a program, but when the mobile station is turned upside down the identifying markings are no longer valid. Though an experienced user will know the keys and their functions by heart, the use of the mobile station is facilitated by including one, or often at least two identifying markings in the keys of the keypad. One identifying marking, which is oriented to correspond to the orientation of the window of the display element, can be seen at any one time. Thus the identifying markings of the keys of the keypad correspond fully to their programmed function, irrespective of the operating position of the mobile station, so that the use of the mobile station does not require any special memorizing or expertise.

In practice, the small size of the keys makes it extremely difficult to fit two identifying markings onto each key. For this reason, the identifying marking according to the invention comprises a composite marking arranged in the key or on its surface, and a light source arranged in connection with it. The composite marking is arranged in such a way that the distinguishable part of it varies according to the lighting. This creates identifying markings that are the right way round at all times, simply by altering the lighting of the keypad. Small LEDs can also be used to form the identifying markings.
Figure 1c shows a diagram of one key 19 equipped with a composite marking 21, which clearly shows the number 4. In this position, the number 9 that is correspondingly visible in the upside-down operating position, is only seen as a faint outline.

By using the techniques described above, the mobile station can be used in different positions. Further, the operating state of the loudspeaker and microphone according to the invention is arranged to change automatically according to the display element. Thus, calls can also be made in different operating positions. The construction of the mobile station can vary, depending on the components available. When using specialized components, the mobile station includes two loudspeaker-microphone pairs, in which case the central unit selects the component from each pair that is appropriate at the time. In Figure 2, each loudspeaker-microphone pair 22 is shown as a single part, which thus incorporates both a loudspeaker 13 and a microphone 14. Alternatively, the mobile station includes two sound elements, which are arranged to operate as either a loudspeaker or a microphone, according to the signal of the detector element. Little installation space is then required, as in both embodiments the operating states are changed by the software, according to the state of the detector element.

According to the invention, at its simplest the orientation of the window of the display element changes according to the signal of the detector element. Depending on the embodiment, the functions of the keypad and the loudspeaker and microphone also change in the manner described above. Figure 2 shows a block diagram of the operation of the mobile station according to the invention. The area bounded by the broken line depicts the mobile station 10 while the blocks shown in a stack depict the mobile station's various components. In terms of the operation of the mobile station, there is a single main condition, with a value that depends on the state of the detector element 16. The software in the central unit 23 controls the other components of the mobile station 10 according to the state of the detector element. The other settings too can be made using the software. In the normal operating position, the position condition of the detector element is positive, in which case the central unit is in a normal state. The central unit then controls each component normally. This is shown in Figure 2 by the marking 'Model' 24 and the corresponding components marked with the number 1. If the position condition of the detector element 16 is negative, the central unit 23 changes to the operating state 'Mode2' 25. In this case, the control of the keypad 12 and the display element 11 then changes and the operating states of both the loudspeaker 13 and the microphone 14 change. Thus, all the functions of the mobile station can be used, irrespective of its position.

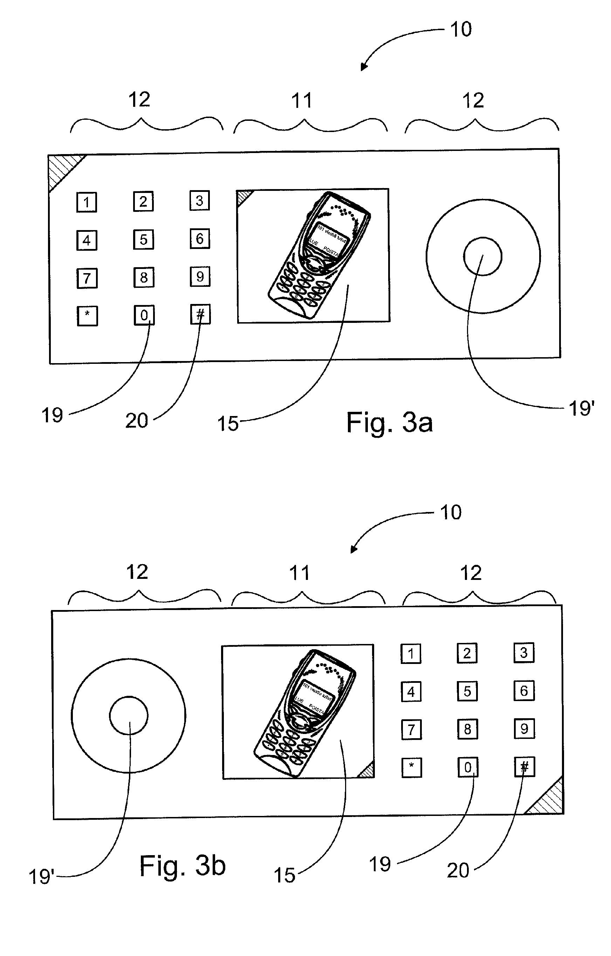

Figure 3a shows a second embodiment of the mobile station 10 according to the invention. In this embodiment, the display element 11 of the mobile station 10 is in the middle of the keypad 12. In other words, both hands are used to operate the keypad 12. In addition, the keypad 12 includes a joystick 19' on the right-hand side. The user of the mobile station according to the invention can select which hand to use to operate the various parts of the keypad. If the user wishes, the mobile station can be simply turned around the other way, in which case the joystick 19' will be on the left-hand side of the display element 11 (Figure 3b). However, the functions of the mobile station remain logically the same for the user, irrespective of the operating position of the mobile station. On the other hand, the keypad can be programmed to operate in different ways, depending on the position of the mobile station. Instead of a joystick, it is possible to use some other similar element, for example, a cross control key. The keypad can thus comprise individual keys or other elements, for use in operating the mobile station.

The operating principle of the mobile station according to the invention can be applied in various kinds of mobile stations. A state sensor can be easily added to the construction of the mobile station and the software tailored. Especially the operation of the mobile station becomes more versatile and easier than previously. At the same time, there are fewer keying errors and accidents, such as dropping the mobile station. In addition, the mobile station and its car-phone installation kit can be installed in two different ways, thus facilitating and diversifying the installation and use of the mobile station. Correspondingly, the mobile station according to invention can be used with hands-free equipment, or only with an external earphone.

## Claims

1. A mobile station including a display element, which also includes a keypad (12), a loudspeaker (13), and a microphone (14), as well as connection and control means for them and an operating system, the orientation of the window (15) of the display element (11) being arranged to be alterable in relation to the mobile station (10), **characterized in that** the mobile station (10) includes a detector element (16) that senses its position, in order to automatically change the orientation of the window (15).

2. A mobile station according to Claim 1, **characterized in that** the detector element (16) is a state sensor, which is arranged to sense the normal operating position of the mobile station (10) and the corresponding essentially upside-down operating position.

3. A mobile station according to Claim 1 or 2, **characterized in that** the operation of the keypad (12) is arranged to change automatically according to the display element (11).

4. A mobile station according to Claim 3, **characterized in that** one or several of the keys (19) of the keypad (12) include at least two identifying markings (20), of which, at any one time, one identifying marking (20) can be distinguished, the orientation of which corresponds to the position of the window (15) of the display element (11).

5. A mobile station according to Claim 4, **characterized in that** the identifying marking (20) comprises a composite marking (21) arranged in the key (19) or on its surface, and a light source arranged in connection with it.

6. A mobile station according to any of Claims 1 - 5, **characterized in that** the operating state of the loudspeaker (13) and the microphone (14) is arranged to change automatically according to the display element (11).

7. A mobile station according to Claim 6, **characterized in that** the mobile station (10) includes two loudspeaker-microphone pairs (22), or two sound elements, which are arranged to operate as either a loudspeaker (13) or a microphone (14) according to the signal of the detector element (16).

8. A mobile station according to any of Claims 1 - 7, **characterized in that** the keypad (12) includes a joystick (19') or similar.
